# EUROPEAN PATENT APPLICATION

(11) **EP 4 832 598 A1**
(43) Date of publication of application: **28.10.2026**
(21) Application number: 25751014.9
(22) Date of filing: 03.01.2025
(51) Int. Cl.: H04W 52/02

(54) **COMMUNICATION METHOD AND SYSTEM, AND RELATED DEVICE**

(30) Priority: 06.02.2024 CN 202410172068
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Gill Jennings & Every LLP
(86) International application number: PCT/CN2025/070369
(87) International publication number: WO 2025/167412

(57) **Abstract**

Embodiments of this application provide a communication method and system and a related device. The communication method includes: A UE sends a wake-up signal to a second network element through a first network element, or the UE sends the wake-up signal to the second network element. The wake-up signal is used for triggering the second network element to send a first signal, and the UE has not established an RRC connection with the first network element and the second network element. Then, the second network element sends the first signal, and the UE accesses the second network element based on the received first signal, or performs signal quality measurement on the received first signal. The second network element may not need to broadcast the first signal before receiving the wake-up signal, so that the second network element can save energy consumption generated by broadcasting the first signal, to achieve network energy saving. In addition, after receiving the wake-up signal, the second network element can send the first signal to ensure a normal network function, for example, to ensure that the UE can normally access the second network element or can implement quality measurement on a signal from the second network element.

## Description

This application claims priority to Chinese Patent Application No. 202410172068.1, filed with China National Intellectual Property Administration on February 6, 2024, and entitled "COMMUNICATION METHOD AND SYSTEM AND RELATED DEVICE", which is incorporated herein by reference in its entirety.

### TECHNICAL FIELD

This application relates to the field of communication technologies, and in particular, to a communication method and system and a related device.

### BACKGROUND

In an actual application scenario, a plurality of network elements (such as base stations) often provide communication services for a user equipment (user equipment, UE), and different network elements communicate with the UE at different frequencies. In addition, the plurality of network elements may support carrier aggregation (carrier aggregation, CA), to satisfy a relatively high requirement of the UE for a bandwidth. The plurality of network elements may share a site at a same location, that is, may be co-located (co-located). Alternatively, the plurality of network elements may be deployed at different sites, or the like. Under normal circumstances, each network element may periodically send a synchronization signal and physical broadcast channel block (synchronization signal/physical broadcast channel block, SSB) signal and a system information block 1 (system information block 1, SIB1) signal, so that the UE within signal coverage of the network element can perform downlink synchronization with the network element in time domain and frequency domain and access the network element based on the received SSB signal and SIB1 signal.

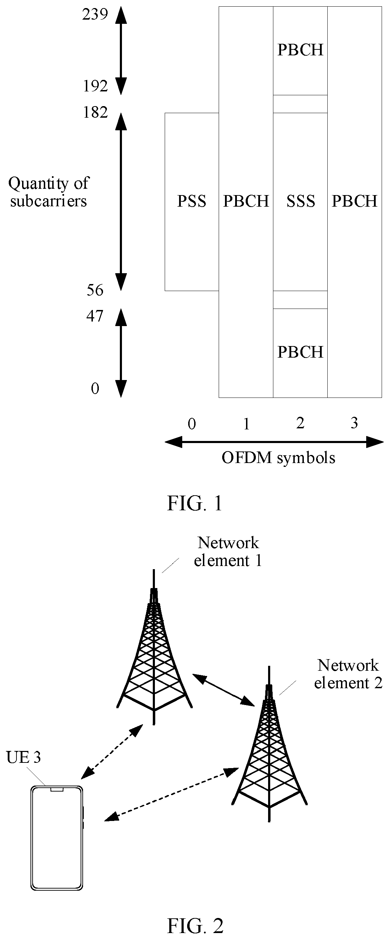

As shown in FIG. 1, the SSB includes a primary synchronization signal (primary synchronization signal, PSS), a secondary synchronization signal (secondary synchronization signal, SSS), a physical broadcast channel (physical broadcast channel, PBCH), and a demodulation reference signal (demodulation reference signal, DMRS). Under normal circumstances, an SSB occupies four orthogonal frequency division multiplexing symbols (orthogonal frequency division multiplexing, OFDM) in time domain, and occupies 240 subcarriers in frequency domain.

However, when each network element broadcasts the SSB signal and the SIB1 signal on one or more beams (beams), the network element remains in a continuous high-power operating state, causing energy consumption of the network element to be maintained at a relatively high level for a long time.

### SUMMARY

This application provides a communication method and system and a related device, to reduce energy consumption of a network element and achieve network energy saving.

To achieve the foregoing objectives, this application provides the following technical solutions.

According to a first aspect, this application provides a communication method. The communication method is applied to a second network element. Specifically, the second network element receives a wake-up signal. The wake-up signal may be sent by a first network element to the second network element, or may be sent by a UE (a user equipment) to the second network element, and the wake-up signal is used for triggering the second network element to send a first signal. The first signal is used by the UE to access the second network element or by the UE to perform signal quality measurement on the first signal, where the UE has not established an RRC (radio resource control) connection with the first network element and the second network element. Then, the second network element sends the first signal.

The second network element may not need to broadcast the first signal required for the UE to access the second network element or perform the signal quality measurement before receiving the wake-up signal, so that the second network element can save energy consumption generated by broadcasting the first signal, to achieve network energy saving. In addition, after receiving the wake-up signal, the second network element can send the first signal to ensure a normal network function, for example, to ensure that the UE can normally access the second network element or can implement quality measurement on a signal from the second network element. Further, before the receiving a wake-up signal, the second network element may not send an SSB (a synchronization signal/physical broadcast channel block), or may send a DRS so that the UE achieves downlink synchronization. Compared with the manner in which the second network element sends the SSB, energy consumption of the second network element may be further saved.

In a possible implementation, before the receiving a wake-up signal, the second network element may further send an LP-SS (a low-power synchronization signal). In this case, the first signal sent by the second network element is specifically an SSB. Therefore, compared with the manner in which the second network element sends the SSB before receiving the wake-up signal, power consumption generated by sending the LP-SS is less than power consumption generated by sending the SSB, to further save energy consumption of the second network element.

In a possible implementation, before the receiving a wake-up signal, the second network element may send a DRS. In this case, the first signal sent by the second network element may be specifically an SSB and a SIB1 (a system information block). Alternatively, the first signal sent by the second network element may be specifically an MIB (a master information block) and a SIB1. Therefore, compared with the manner in which the second network element sends the SSB before receiving the wake-up signal, power consumption generated by sending the DRS is usually less than power consumption generated by sending the SSB, to further save energy consumption of the second network element.

In a possible implementation, the first signal sent by the second network element includes an MIB and a SIB1. Therefore, the second network element may further send the MIB and the SIB1 to the first network element, so that the first network element forwards the MIB and the SIB1 to the UE, to ensure an energy-saving effect of the second network element.

In a possible implementation, before the receiving a wake-up signal, the second network element may send an SSB. In this case, the first signal sent by the second network element may be specifically an SSB and a SIB1. Alternatively, the first signal sent by the second network element may be specifically a SIB1. Therefore, compared with the manner in which the second network element sends the SSB and the SIB1 before receiving the wake-up signal, energy consumption generated by sending the SIB1 may be saved, to further achieve energy saving of the second network element.

According to a second aspect, this application provides a communication method. The communication method is applied to a first network element. Specifically, the first network element sends a second signal. The second signal indicates a first time-frequency resource used by a UE (a user equipment) to send an on-demand message to the first network element, and the UE has not established an RRC (radio resource control) connection with the first network element and the second network element. Then, the first network element receives the on-demand message from the UE. The on-demand message is used for triggering the first network element to send a wake-up signal, the wake-up signal is used for triggering the second network element to send a first signal, and the first signal is used by the UE to access the second network element or by the UE to perform signal quality measurement on the first signal from the second network element. Lastly, the first network element sends the wake-up signal to the second network element.

Therefore, only when the UE sends the on-demand message to the first network element, the first network element triggers the second network element to send the first signal by sending the wake-up signal to the second network element. In this way, before the receiving a wake-up signal, the second network element may not need to broadcast the first signal required for the UE to access the second network element, so that the second network element can save energy consumption generated by the first signal, to achieve network energy saving. In addition, after receiving the wake-up signal, the second network element may send the first signal to ensure a normal network function.

In a possible implementation, the first network element may further receive, from the second network element, an MIB (a master information block) and a SIB (a system information block) 1 corresponding to the second network element, and send the MIB and the SIB1 corresponding to the second network element. For example, the MIB and the SIB1 corresponding to the second network element may be added into a SIB1 of the first network element for sending.

In a possible implementation, if the first time-frequency resource indicated by the first network element is a time-frequency resource on a PRACH (a physical random access channel), the on-demand message sent by the UE is specifically a random access message.

In a possible implementation, the second signal sent by the first network element includes group-common DCI (downlink control information), and the group-common DCI carries an identifier of the first time-frequency resource. Therefore, the UE may implement sending the on-demand message to the first network element based on the first time-frequency resource indicated by the first network element.

According to a third aspect, this application provides a communication method. The communication method is applied to a first network element. Specifically, the first network element sends a second signal. The second signal indicates a second time-frequency resource used by a UE (a user equipment) to send a wake-up signal to the second network element, and the UE has not established an RRC (radio resource control) connection with the first network element and the second network element. Further, the wake-up signal is used for triggering the second network element to send a first signal. The first signal is used by the UE to access the second network element or by the UE to perform signal quality measurement on the first signal.

Therefore, only when the UE sends the wake-up signal to the second network element, the second network element sends the first signal. In this way, before the receiving a wake-up signal, the second network element may not need to broadcast the first signal required for the UE to access the second network element or measure signal quality, so that the second network element can save energy consumption generated by the first signal, to achieve network energy saving. In addition, after receiving the wake-up signal, the second network element may send the first signal to ensure a normal network function.

In a possible implementation, if the second time-frequency resource indicated by the first network element is a time-frequency resource on a PRACH (a physical random access channel), the wake-up signal sent by the UE is specifically a random access message.

In a possible implementation, the second signal sent by the first network element includes group-common DCI (downlink control information), and the group-common DCI carries an identifier of the second time-frequency resource. Therefore, the UE may implement sending the wake-up signal to the second network element based on the second time-frequency resource indicated by the first network element.

According to a fourth aspect, this application provides a communication method. The communication method is applied to a UE (a user equipment). Specifically, the UE receives a second signal. The second signal indicates a first time-frequency resource used by the UE to send an on-demand message to a first network element, and the UE has not established an RRC (radio resource control) connection with the first network element and a second network element. Then, the UE sends the on-demand message to the first network element through the first time-frequency resource. The on-demand message is used for triggering the first network element to send a wake-up signal, the wake-up signal indicates the second network element to send a first signal, and the first signal is used by the UE to access the second network element or by the UE to perform signal quality measurement on the first signal. Then, the UE receives the first signal, and accesses the second network element based on the first signal, or performs signal quality measurement on the first signal.

Therefore, before the UE sends the on-demand message, the second network element may not need to broadcast the first signal, so that the second network element can save energy consumption generated by the first signal, to achieve network energy saving. In addition, after receiving the wake-up signal, the second network element may send the first signal to ensure a normal network function.

In a possible implementation, if the first time-frequency resource indicated by the second signal is a time-frequency resource on a PRACH (a physical random access channel), the on-demand message sent by the UE is a random access message.

In a possible implementation, the second signal includes group-common DCI (downlink control information), and the group-common DCI carries an identifier of the first time-frequency resource.

According to a fifth aspect, this application provides a communication method. The communication method is applied to a UE (a user equipment). Specifically, the UE achieves downlink synchronization with a second network element. The UE has not established an RRC (radio resource control) connection with a first network element and the second network element. Then, the UE receives a second signal. The second signal indicates a second time-frequency resource used by the UE to send a wake-up signal to the second network element, and sends the wake-up signal to the second network element through the second time-frequency resource. The wake-up signal indicates the second network element to send a first signal, and the first signal is used by the UE to access the second network element or by the UE to perform signal quality measurement on the first signal. Lastly, the UE receives the first signal, and accesses the second network element based on the first signal, or performs signal quality measurement on the first signal.

Therefore, before the UE sends the wake-up signal to the second network element, the second network element may not need to broadcast the first signal, so that the second network element can save energy consumption generated by the first signal, to achieve network energy saving. In addition, after receiving the wake-up signal, the second network element may send the first signal to ensure a normal network function.

In a possible implementation, when the UE achieves downlink synchronization with the second network element, specifically, the UE may receive an LP-SS (a low-power synchronization signal), and achieve downlink synchronization with the second network element based on the LP-SS. Alternatively, the UE may receive a DRS (a discovery reference signal), and achieve downlink synchronization with the second network element based on the DRS. The DRS includes a PSS (a primary synchronization signal) and an SSS (a secondary synchronization signal). Alternatively, the UE may receive an SSB (a synchronization signal/physical broadcast channel block) of the second network element, and achieve downlink synchronization with the second network element based on the SSB. Alternatively, the UE may receive an SSB and a SIB1 (a system information block) of the first network element, and achieve downlink synchronization with the second network element based on the SSB and the SIB1 of the first network element. The second network element and the first network element are co-located.

In a possible implementation, the UE achieves downlink synchronization with the second network element based on the LP-SS. In this case, the wake-up signal sent by the UE is used for triggering the second network element to send an SSB, and the first signal is used by the UE to perform signal quality measurement on the first signal. Then, when the UE sends the wake-up signal to the second network element through the second time-frequency resource, specifically, when signal quality of the received LP-SS is less than a threshold, the UE sends the wake-up signal to the second network element through the second time-frequency resource.

In a possible implementation, the second time-frequency resource used by the UE to send the wake-up signal is a time-frequency resource on a PRACH (a physical random access channel), and the wake-up signal is a random access message.

In a possible implementation, the second signal includes group-common DCI (downlink control information), and the group-common DCI carries an identifier of the second time-frequency resource.

According to a sixth aspect, this application provides a UE (a user equipment). The UE includes a transceiver and a processor. The transceiver is configured to perform a receiving operation and a sending operation in the method according to the foregoing fourth aspect or any one of the implementations of the fourth aspect, or perform a receiving operation and a sending operation in the method according to the foregoing fifth aspect or any one of the implementations of the fifth aspect. The processor is configured to perform another operation other than the receiving operation and the sending operation in the method according to the foregoing fourth aspect or any one of the implementations of the fourth aspect, or perform another operation other than the receiving operation and the sending operation in the method according to the foregoing fifth aspect or any one of the implementations of the fifth aspect.

According to a seventh aspect, this application provides a network element. The network element includes a transceiver and a processor. The transceiver is configured to perform the receiving operation and the sending operation in the method according to the foregoing first aspect or any one of the implementations of the first aspect, or perform the receiving operation and the sending operation in the method according to the foregoing second aspect or any one of the implementations of the second aspect, or perform the receiving operation and the sending operation in the method according to the foregoing third aspect or any one of the implementations of the third aspect. The processor is configured to perform another operation other than the receiving operation and the sending operation in the method according to the foregoing first aspect or any one of the implementations of the first aspect, or perform another operation other than the receiving operation and the sending operation in the method according to the foregoing second aspect or any one of the implementations of the second aspect, or perform another operation other than the receiving operation and the sending operation in the method according to the foregoing third aspect or any one of the implementations of the third aspect.

According to an eighth aspect, this application provides a communication system. The communication system includes a UE (a user equipment) and a network element. The UE is configured to perform the method according to the foregoing fourth aspect or any one of the implementations of the fourth aspect, or perform the method according to the foregoing fifth aspect or any one of the implementations of the fifth aspect. The network element is configured to perform the method according to the foregoing first aspect or any one of the implementations of the first aspect, or perform the method according to the foregoing second aspect or any one of the implementations of the second aspect, or perform the method according to the foregoing third aspect or any one of the implementations of the third aspect.

According to a ninth aspect, this application provides a computer storage medium, configured to store a computer program. The computer program, when executed, is used for implementing the communication method provided in any one of the first aspect to the fifth aspect of this application.

According to a tenth aspect, this application provides a computer program product including instructions. The instructions, when run on at least one computing device, cause the at least one computing device to implement the communication method provided in any one of the first aspect to the fifth aspect of this application.

### BRIEF DESCRIPTION OF DRAWINGS

FIG. 1 is a schematic structural diagram of an SSB;
FIG. 2 is a structural diagram of an example communication system according to an embodiment of this application;
FIG. 3 is a schematic flowchart of a communication method according to an embodiment of this application;
FIG. 4 is a schematic flowchart of another communication method according to an embodiment of this application;
FIG. 5A is a schematic structural diagram of an example DRS according to an embodiment of this application;
FIG. 5B is a schematic structural diagram of another example DRS according to an embodiment of this application;
FIG. 5C is a schematic structural diagram of yet another example DRS according to an embodiment of this application;
FIG. 6 is a schematic flowchart of still another communication method according to an embodiment of this application;
FIG. 7 is a schematic flowchart of still another communication method according to an embodiment of this application;
FIG. 8 is a schematic flowchart of yet another communication method according to an embodiment of this application;
FIG. 9 is a schematic flowchart of yet another communication method according to an embodiment of this application;
FIG. 10 is a schematic flowchart of yet another communication method according to an embodiment of this application;
FIG. 11 is a schematic structural diagram of a network element according to an embodiment of this application; and
FIG. 12 is a schematic structural diagram of a UE according to an embodiment of this application.

### DESCRIPTION OF EMBODIMENTS

Technical solutions in embodiments of this application are clearly described below with reference to the accompanying drawings in embodiments of this application. Terms used in the following embodiments are only intended to describe specific embodiments, and are not intended to limit this application. As used in this specification and the claims of this application, a singular expression form, "one", "a", "the", "foregoing", "said", or "this", is intended to include expression forms such as "one or more", unless clearly indicated to the contrary in the context. It should also be understood that, in embodiments of this application, "one or more" means one, two, or more than two, and "and/or" describes an association relationship between associated objects, indicating that three relationships may exist. For example, "A and/or B" may represent the following cases: only A exists, both A and B exist, and only B exists, where A and B may be singular or plural. The character "/" generally indicates an "or" relationship between associated objects.

Reference to "one embodiment", "some embodiments", or the like described in this specification means that a specific feature, structure, or characteristic described in combination with the embodiment is included in one or more embodiments of this application. Therefore, phrases "in an embodiment", "in some embodiments", "in some other embodiments", "in some additional embodiments", and the like appearing in different parts of this specification do not necessarily refer to the same embodiment, but mean "one or more but not all embodiments", unless otherwise specially emphasized in another manner. Terms "comprise", "include", "have", and variations thereof all mean "including but not limited to", unless otherwise specially emphasized in another manner.

"A plurality of" involved in embodiments of this application means being greater than or equal to two. It should be noted that, in the description of embodiments of this application, terms such as "first" and "second" are merely used for distinguishing, and cannot be understood as an indication or implication of relative importance, or an indication or implication of a sequence.

Embodiments of this application are applied to a communication system, which may be a fifth generation (5G) communication system, or may be an LTE and 5G hybrid architecture, or a 5G new radio (5G New Radio, 5G NR) system, and a new communication system in future communication development, and the like.

An example of the communication system is shown in FIG. 2. The communication system includes a network element 1, a network element 2, and a UE3.

In embodiments provided in this application, the network element 1 may be any device that is located at a network side and has a wireless transceiver function, including but not limited to: a base station (gNodeB or gNB) or a transmission receiving point/transmission reception point (transmission receiving point/transmission reception point, TRP) in new radio (new radio, NR), or the like. The network element 1 may be a macro base station, a micro base station, a Picocell, a small cell, a relay station, a balloon station, or the like. The network element 1 may include one or more co-sited or non-co-sited transmission reception points (Transmission Reception Point, TRP). The network element 1 may alternatively be a radio controller, a centralized unit (centralized unit, CU), and/or a distributed unit (distributed unit, DU) in a cloud radio access network (cloud radio access network, CRAN) scenario. The network element 1 may communicate with a terminal device, and may also communicate with the terminal device through a relay station. The network element 2 is similar to the network element 1.

A base station may be configured with a plurality of cells (cells), where each of the cells may be a same carrier (Component Carrier, CC) or different carriers. In this application, the term "cell" and the term "carrier" are interchangeable. The carrier may be understood as a segment of frequency within a band/frequency range (Band). For example, in NR, a frequency range of a band numbered 78, that is, Band n78, is 3300 MHz to 3800 MHz. Therefore, the band has a bandwidth of 500 MHz. If one CC occupies a bandwidth of 100 MHz, five CCs may be formed based on Band n78. In addition, the base station may be configured with three sectors, and each of the sectors corresponds to a cell. In a carrier aggregation (CA) scenario, the carrier aggregation may be intra-band (intra band) carrier aggregation, or inter-band (inter band) carrier aggregation. Aggregation of two carriers is used as an example. For the intra-band carrier aggregation, aggregated carriers may be two carriers within a same band, for example, two CCs within Band n78 that occupy a bandwidth of 100 MHz. For the inter-band carrier aggregation, aggregated carriers may be two carriers within different bands, for example, one CC within Band n78 that occupies a bandwidth of 100 MHz and the other CC within Band n41 that occupies a bandwidth of 100 MHz. The aggregated carriers may come from a same base station. In this case, it may be considered that the carriers are co-located (co-located). The aggregated carriers may also come from different base stations. In this case, the carriers may be co-located, or may be non-co-located.

The network element 1 and the network element 2 are configured to implement different cells. In this case, the network element 1 and the network element 2 may be different base stations, and are configured to implement different cells. Alternatively, the network element 1 and the network element 2 may be located on a same base station, for example, may be different sector antennas on the same base station, and configured to implement different cells. Further, the network element 1 and the network element 2 may further support CA (carrier aggregation), so as to satisfy a requirement of the UE3 for a relatively high bandwidth.

The UE3 may communicate with a plurality of network elements of different technologies. For example, the UE3 may communicate with a network element supporting an LTE network, may also communicate with a network element supporting a 5G network, and may further perform dual connectivity with a base station supporting an LTE network and a network element supporting a 5G network.

In embodiments provided in this application, the UE3 may be in various forms, for example, a mobile phone (mobile phone), a tablet computer (Pad), a computer with wireless receiving and sending functions, a virtual reality (virtual reality, VR) terminal device, an augmented reality (augmented reality, AR) terminal device, a wireless terminal in industrial control (industrial control), an on-board terminal device, a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), and a wearable terminal device. The UE may also be referred to as a terminal device, an access terminal device, an on-board terminal, an industrial control terminal, a UE unit, a UE station, a mobile station, a mobile console, a remote station, a remote terminal device, a mobile device, a UE terminal device, a terminal device, a wireless communication device, a UE agent, a UE apparatus, or the like. The terminal may also be a fixed terminal or a mobile terminal.

The foregoing description is provided by using an example in which the communication system includes the network element 1, the network element 2, and the UE3. In another possible implementation, the communication system may include a plurality of UEs or a larger quantity of network elements. Alternatively, in another possible implementation, the network element 1 in the communication system may be replaced by a network element in another form. No limitation is imposed herein. For ease of understanding, the interaction between the UE3 and the network element 1 is still used as an example.

Under normal circumstances, both the network element 1 and the network element 2 may periodically broadcast an SSB and a SIB1 on a plurality of beams, so that when a UE (such as the UE3) is within signal coverage, the UE may achieve downlink synchronization with the network element 1 based on the SSB and the SIB1 broadcast by the network element 1, and the UE can achieve downlink synchronization with the network element 2 based on the SSB and the SIB1 broadcast by the network element 2. For example, each of the network elements may send the SSB on each of the beams every 20 ms. A UE (including the UE3) within signal coverage of the network element attempts to detect the SSB and decode a PSS and an SSS. Once the UE3 successfully detects the PSS and the SSS, the UE attempts to decode a PBCH. Once the UE3 successfully detects the PBCH, the UE3 decodes a master information block (master information block, MIB). Then, the UE3 finds a position of CORESET0 (that is, a CORESET for a PDCCH or DCI used for SIB1 transmission) and SearchSpace information based on pdcch-ConfigSIB1 information in the MIB. The UE3 blindly decodes downlink control information (downlink control information, DCI) 1_0 in SearchSpace. The UE3 detects and decodes, based on the DCI 1_0, a physical downlink shared channel (physical downlink shared channel, PDSCH) carrying the SIB1, and then decodes the SIB1. If the SIB1 carries information about another SIB, the UE3 may further decode the another SIB (such as a SIB2). Through the foregoing process, the UE3 can obtain time and frequency synchronization with the network element, and detect an ID of the network element. However, each network element in the communication system continuously sends the SSB and the SIB1 on a plurality of beams, causing high power consumption of the plurality of network elements.

Therefore, embodiments of this application provide a communication method. For the network element 2, before receiving a wake-up signal, the network element 2 may not send a SIB1, to save energy consumption of the network element 2 and achieve network energy saving (network energy saving, NES). Further, before receiving the wake-up signal, the network element 2 may further not send an SSB, or send a discovery reference signal (discovery reference signal, DRS) for downlink synchronization with relatively low energy consumption, so as to achieve further energy saving of the network element 2. In addition, after UE3 wakes up the network element 2, the network element 2 may start to send a SIB1 and/or an SSB, so that the UE3 may normally access the network element 2 based on the SSB and/or the SIB1.

The following describes various communication methods provided in this application for achieving network energy saving with reference to the accompanying drawings. For ease of understanding, the various communication methods described below with reference to the accompanying drawings are described by using an example in which the methods are applied to the communication system shown in FIG. 2. During actual application, the communication process between a network element and a UE in the communication system may also be applied to other possible communication systems. No limitation is imposed herein.

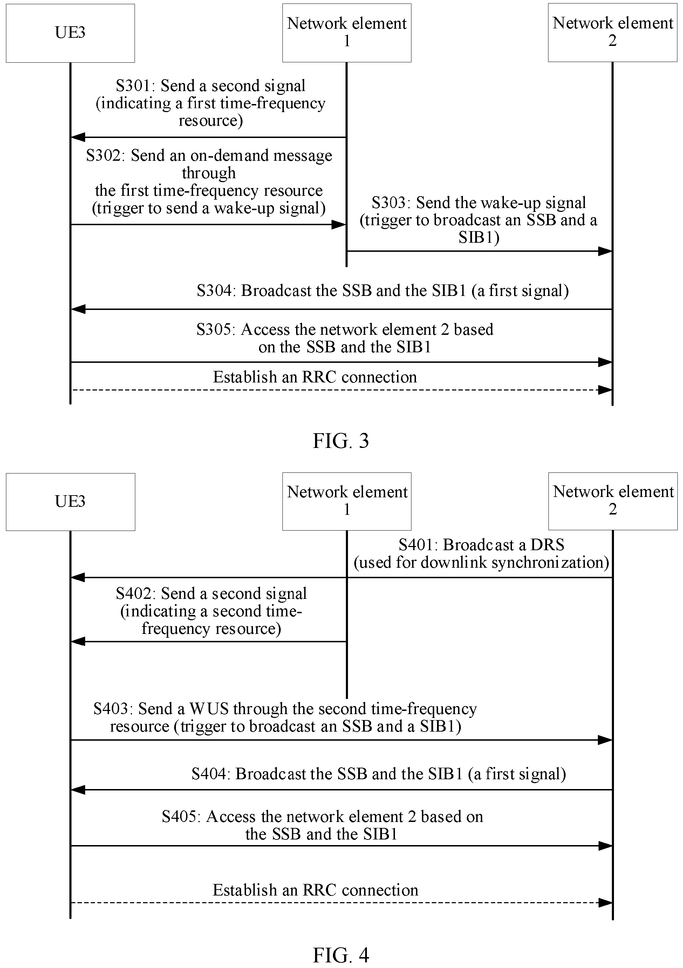

Refer to FIG. 3. A communication method according to an embodiment of this application is shown. As shown in FIG. 3, a process of the communication method includes the following steps.

S301: A network element 1 sends a second signal, where the second signal indicates a first time-frequency resource used by a UE3 to send an on-demand (on-demand) message to the network element 1.

In this embodiment, the UE3 may trigger, by using the network element 1, a network element 2 to provide signals such as an SSB and/or a SIB1 required for accessing the network element 2. The network element 1 may trigger, in response to an indication of the on-demand message sent by the UE3, the network element 2 to provide the SSB and/or the SIB1. Based on this, the network element 1 may indicate, in advance, a time-frequency resource used by the UE3 to send the on-demand message to the network element 1. For ease of distinction and description, the time-frequency resource is referred to as a first time-frequency resource below.

During specific implementation, the network element 1 may send a second signal, so as to indicate the first time-frequency resource by using the second signal.

In a possible implementation, the second signal sent by the network element 1 may be, for example, a SIB1 of the network element 1. In other words, when broadcasting the SSB and the SIB1, the network element 1 may carry indication information of the first time-frequency resource in the SIB1, such as carrying an index (index) of the first time-frequency resource. In this way, after receiving the SSB and the SIB1 sent by the network element 1, the UE3 may decode the SIB1 by using an MIB carried in the SSB, and obtain the indication information of the first time-frequency resource from information obtained by decoding, to determine the first time-frequency resource. Further, the SIB1 broadcast by the network element 1 may also carry information required for accessing the network element 1.

The first time-frequency resource includes a time-domain resource and a frequency-domain resource. The time-domain resource may be, for example, a slot and an OFDM symbol that can be occupied by the UE3 in time domain, and the frequency-domain resource may be, for example, one or more REs that can be occupied by the UE3 in frequency domain. In some examples, the first time-frequency resource may be, for example, a time-frequency resource on a physical random access channel (physical random access channel, PRACH) that can be used when the UE3 sends information to the network element 1.

It may be understood that the foregoing implementation in which the indication information of the first time-frequency resource is carried in the SIB1 is merely used as an implementation example. In another embodiment, the network element 1 may also indicate the first time-frequency resource by broadcasting another type of signal, carrying the indication information of the first time-frequency resource in another type of SIB, or the like. No limitation is imposed herein.

S302: The UE3 sends the on-demand message to the network element 1 through the first time-frequency resource.

The on-demand message sent by the UE3 may be used for triggering the network element 1 to send a wake-up signal (wake up signal, WUS) to the network element 2. The WUS is used for triggering the network element 2 to broadcast a first signal. The first signal may be, for example, one or more of the SSB, the SIB1, and the MIB corresponding to the network element 2. For ease of understanding, in this embodiment, a description is provided by using an example in which the first signal is specifically the SSB and the SIB1.

In this embodiment, the on-demand message sent by the UE3 may use any one of the following implementations.

In a first possible implementation, the UE3 may send the on-demand message by using the first time-frequency resource on the PRACH. In this case, the on-demand message may be a random access message. Correspondingly, the network element 1 determines, after receiving the random access message, that the UE3 requests the network side to provide the first signal of the network element 2.

In a second possible implementation, the network element 1 may also send group-common (group-common) downlink control information (downlink control information, DCI). The group-common DCI may define time-frequency resources that can be used by a plurality of UEs to send the on-demand message to the network element 1. The group-common DCI may include a plurality of bits. Consecutive partial bits in the plurality of bits indicate a time-frequency resource that can be used by a UE. Different partial bits in the plurality of bits indicate time-frequency resources that can be used by different UEs. In this way, after receiving the group-common DCI, the UE3 may parse, from the group-common DCI, the identifier of the first time-frequency resource that can be used by the UE3, to determine the first time-frequency resource used for sending the on-demand message.

During actual application, the network element 1 may also indicate the first time-frequency resource in another manner. No limitation is imposed herein.

S303: The network element 1 sends the wake-up signal to the network element 2 after receiving the on-demand message, where the wake-up signal indicates the network element 2 to send the SSB and the SIB1.

The network element 1 may perform signal detection within a preset resource window after sending the second signal, so as to determine whether the UE sends the on-demand message to the network element 1. In addition, when the on-demand message sent by the UE3 is detected, the network element 1 may generate the WUS, and may send the WUS to the network element 2 through an Xn interface, so as to indicate the network element 2 to send the SSB and the SIB1. The WUS sent by the network element 1 may be implemented in the following manners.

In Example 1, the WUS may be a defined new wake-up message. For example, a new type of message may be defined in a communication standard protocol (such as release 19). A name of the message may be, for example, "WAKEUP REQUEST", so that the network element 1 can trigger, by sending the message to the network element 2, the network element 2 to broadcast the SSB and the SIB1.

In Example 2, the WUS may be implemented by defining a new information element (information element, IE) in an existing message. For example, an IE named "Wakeup Request" may be defined in an existing "HANDOVER REQUEST" message, "XN SETUP REQUEST" message, or "CELL ACTIVATION REQUEST" message in the communication standard protocol. Therefore, the network element 1 can trigger, by sending a message including the IE to the network element 2, the network element 2 to broadcast the SSB and the SIB1.

In Example 3, the WUS may be implemented by defining a new enumeration value in the IE included in the existing message. For example, a new enumeration value "wakeup" may be defined in "Cause" (an IE) included in the existing "HANDOVER REQUEST" message in the communication standard protocol. Therefore, the network element 1 can trigger, by sending a message including the enumeration value to the network element 2, the network element 2 to broadcast the SSB and the SIB1.

During actual application, the network element 1 may also send the WUS to the network element 2 in another manner. No limitation is imposed herein.

Further, the WUS sent by the network element 1 to the network element 2 may further carry a reason for triggering the network element 2 to broadcast the SSB and the SIB1 (or another signal). For example, the WUS sent by the network element 1 to the network element 2 may include a cause (cause) field. The cause field may include one or more bits. The cause field may have a plurality of values. When a value of the cause field is a first value, it may indicate that the UE3 needs to access the network element 2. When the value of the cause field is a second value, it may indicate that the UE3 needs to perform signal quality measurement on a signal from the network element 2, or the like. Possible values of the cause field may be predefined in the communication standard protocol.

S304: The network element 2 broadcasts the SSB and the SIB1 after receiving the wake-up signal.

In this embodiment, after receiving the WUS, the network element 2 may transition from a state of not broadcasting the SSB and the SIB1 to a state of broadcasting the SSB and the SIB1 with relatively high power consumption, so that the UE3 accesses the network element 2 based on the SSB and the SIB1 broadcast by the network element 2.

In a first implementation example, the network element 2 may resume periodic broadcasting of the SSB and the SIB1 after receiving the WUS, so that the UE3 can access the network element 2 based on the received SSB and SIB1.

In a second implementation example, after receiving the WUS, the network element 2 may broadcast the SSB and the SIB1 within a preset quantity of signal broadcast periods. For example, the network element 2 may continuously broadcast the SSB and the SIB1 within two signal broadcast periods. After completing the broadcasting of the SSB and the SIB1 within the preset quantity of signal broadcast periods, the network element 2 may reenter the state of not broadcasting the SSB and the SIB1, until the network element 2 restarts broadcasting the SSB and the SIB1 after receiving the WUS again.

The quantity of times that the network element 2 continuously broadcasts the SSB and the SIB1 may be defined in the communication standard protocol. Alternatively, when previously sending the second signal, the network element 1 may carry, in the second signal, the quantity of times the network element 2 continuously broadcasts the SSB and the SIB1 after receiving the WUS, so that the UE3 increases a success rate of signal decoding by continuously receiving the SSB and the SIB1.

In a third implementation example, the network element 2 may determine, based on a current load condition, whether to continue not broadcasting the signal, or to broadcast the SSB and the SIB1 with relatively high power consumption. For example, after receiving the WUS, the network element 2 may obtain a load thereof, and determine whether the load is greater than a load threshold. When the load of the network element 2 is greater than the load threshold, the network element 2 may continue not to broadcast the signal, so as to avoid an excessively large load of the network element 2 caused after the UE3 accesses the network element 2. When the load of the network element 2 is less than or equal to the load threshold, it indicates that the network element 2 has sufficient capability to serve a new UE. Therefore, the network element 2 may start to broadcast the SSB and the SIB1, to support the UE3 (and another UE) in accessing the network element 2.

In this embodiment, the network element 2 may not perform beam differentiation during broadcasting of the SSB and the SIB1, that is, within each period, the network element 2 may send only one SSB and SIB1. Alternatively, the network element 2 may also broadcast the SSB and the SIB1 by performing beam differentiation, so that the network element 2 can separately send the SSB and the SIB1 on a plurality of beams after receiving the WUS. In other words, within each period, the network element 2 may send a plurality of SSBs and SIB1s based on different beams. Alternatively, when sending the WUS to the network element 2, the network element 1 may also indicate a beam on which the network element 2 broadcasts the SSB and the SIB1 (a quantity of specified beams may be one or more). For example, the WUS sent by the network element 1 may carry an identifier of a beam, and the identifier indicates a beam on which the network element 2 broadcasts a signal. Therefore, the network element 2 may broadcast the SSB and the SIB1 on the beam indicated by the network element 1.

S305: The UE3 accesses the network element 2 based on the SSB and the SIB1 broadcast by the network element 2.

During specific implementation, after receiving the SSB and the SIB1 of the network element 2, the UE3 may achieve downlink synchronization with the network element 2 based on a PSS and an SSS in the SSB. In addition, the UE3 further decodes information in the SIB1 based on MIB information in the SSB, to obtain configuration information required for accessing the network element 2, so that the UE3 can access the network element 2 based on the configuration information obtained by decoding.

During actual application, the UE3 may further establish a radio resource control (radio resource control, RRC) connection with the network element 2 after accessing the network element 2, so that the UE3 can perform data interaction with the network element 2 through the RRC connection, as shown in FIG. 3. In addition, during broadcasting of the SSB and the SIB1 by the network element 2, another UE within signal coverage of the network element 2 may also access the network element 2 based on the SSB and the SIB1 broadcast by the network element 2.

In this embodiment, the network element 2 may not need to broadcast the SSB and the SIB1 before receiving the WUS, so that the second network element can save energy consumption generated by broadcasting the SSB and the SIB1, to achieve network energy saving.

In the embodiment shown in FIG. 3, a description is provided by using an example in which the UE3 triggers, through the network element 1, the network element 2 to broadcast the first signal (specifically, the SSB and the SIB1). In another embodiment, the UE3 may also directly trigger the network element 2 to broadcast the first signal. An implementation process in which the UE3 directly triggers the network element 2 to broadcast the first signal is described below by using an example with reference to the accompanying drawings. For ease of understanding, in this embodiment, a description is provided by using an example in which the first signal is specifically the SSB and the SIB1.

Refer to FIG. 4. A schematic flowchart of another communication method is shown. The communication method shown in FIG. 4 is described by using an example in which the method is applied to the communication system shown in FIG. 2. As shown in FIG. 4, the method may specifically include the following steps:

S401: A network element 2 broadcasts a DRS, where the DRS is used by a UE3 to achieve downlink synchronization with the network element 2, and the DRS includes a PSS and an SSS.

In this embodiment, the network element 2 may periodically broadcast the DRS, for example, broadcast the DRS every 20 milliseconds (ms), or 40 ms. In this way, the UE3, which is within signal coverage of the network element 2 and is in an idle state (idle) or an inactive state (inactive), can achieve downlink synchronization with the network element 2 based on the DRS broadcast by the network element 2. In this process, the network element 2 does not broadcast an SSB and a SIB1, so as to achieve network energy saving by broadcasting the DRS with relatively low energy consumption.

In addition, a network element 1 may separately send the DRS on a plurality of beams. For example, the network element 1 may separately send the DRS on 8 or 64 beams. In addition, on each of the beams, the network element 1 may send one DRS, or may send a plurality of DRSs. The network element 1 may use different time domains when sending the DRS on different beams. Alternatively, the network element 1 may send the DRS without distinguishing beams. In this case, the network element 1 may send a DRS, or the network element may send a plurality of DRSs, so that the UE3 may improve a success rate of decoding the DRS based on the plurality of DRSs.

The DRS sent by the network element 2 may have the following three non-limiting implementations.

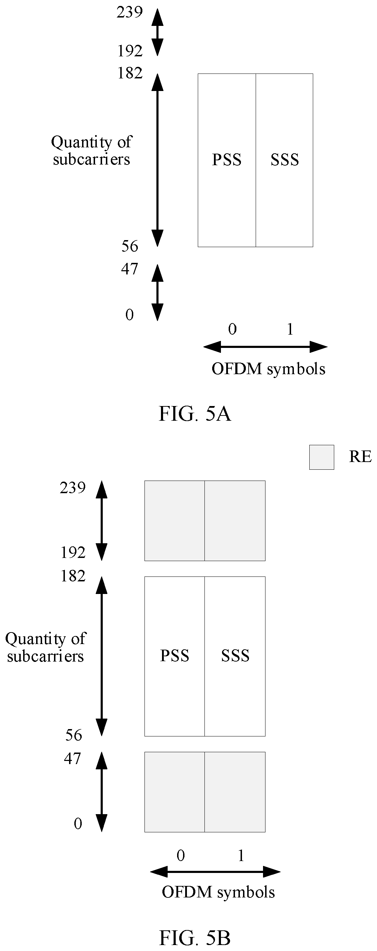

In a first implementation example, as shown in FIG. 5A, the DRS may include only a PSS and an SSS. In addition, the DRS may occupy two OFDM symbols in time domain, where the PSS occupies the first of the OFDM symbols, and the SSS occupies the second of the OFDM symbols. In the meantime, the DRS may occupy 127 subcarriers in frequency domain, and the PSS and the SSS respectively occupy 127 subcarriers in different time domains. In this embodiment, after receiving the DRS, the UE3 specifically completes downlink synchronization based on the PSS and the SSS in the DRS.

It should be noted that in the DRS shown in FIG. 4a, the subcarriers occupied by the PSS and the SSS are merely used as an implementation example, and are not used for limitation. For example, in another implementation example, a quantity of subcarriers occupied by the PSS and the SSS may have another value, and the subcarriers occupied by the PSS and the SSS in frequency domain may also be other subcarriers.

In a second implementation example, as shown in FIG. 5B, the DRS may include a PSS, an SSS, and one or more reserved resource elements (resource element, RE). In FIG. 5B, an example in which a plurality of REs are reserved is provided for description. In this case, the DRS may still occupy two OFDM symbols in time domain, where the PSS occupies the first of the OFDM symbols, and the SSS occupies the second of the OFDM symbols. In the meantime, the DRS may occupy 127 subcarriers in frequency domain, and the PSS and the SSS respectively occupy 127 subcarriers in different time domains.

It should be noted that the subcarriers occupied by the PSS, the SSS, and the RE shown in FIG. 4b are merely used as an implementation example, and are not intended to be limiting. For example, in another implementation example, a quantity of subcarriers occupied by the PSS and the SSS may have another value, and the subcarriers occupied by the PSS and the SSS in frequency domain may also be other subcarriers. In addition, a quantity of subcarriers occupied by the RE may have another value, and the subcarriers occupied in frequency domain may be other subcarriers.

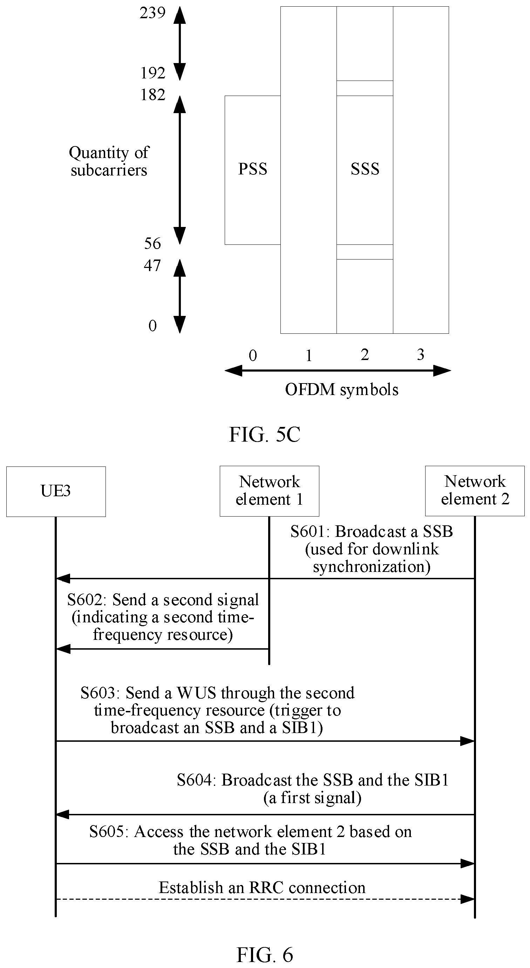

In a third implementation example, as shown in FIG. 5C, the DRS may reuse a structure of the SSB, and may include not only a PSS and an SSS, but also a PBCH. In this case, the DRS may occupy four OFDM symbols in time domain, where the PSS occupies the first of the OFDM symbols, and the SSS occupies the third of the OFDM symbols. In the meantime, the DRS may occupy 240 subcarriers in frequency domain, and the PSS and the SSS respectively occupy 127 subcarriers in different time domains. In the DRS sent by the network element 1, the PBCH may carry no information. For example, the RE where the PBCH is located is of zero power, to save energy consumption generated when the network element 1 sends data carried on the PBCH. In addition, the network element 1 does not send the SIB1 when sending the DRS.

It should be noted that the subcarriers occupied by the PSS, the SSS, and the PBCH in the DRS shown in FIG. 4c are merely used as an implementation example, and are not intended to be limiting.

It can be understood that the foregoing three implementation manners are merely used as some descriptions. In another embodiment, the DRS sent by the network element 1 may also be implemented in another manner. For example, the DRS may occupy three or five symbols in time domain. No limitation is imposed herein. In addition, energy consumption of the network element 2 for broadcasting each of the foregoing DRSs is less than energy consumption generated by the network element 2 for broadcasting the SSB, to effectively improve an energy-saving effect for the network element 2.

Correspondingly, after receiving the DRS, the UE3 may implement downlink synchronization with the network element 2 based on the PSS and the SSS carried in the DRS.

S402: A network element 1 sends a second signal, where the second signal indicates a second time-frequency resource used by the UE3 to send a WUS to the network element 2.

Different from the embodiment shown in FIG. 3, in this embodiment, the UE3 may directly send the WUS to the network element 2. Therefore, the network element 1 may indicate, by sending the second signal, a time-frequency resource used by the UE3 to send the wake-up signal. For ease of distinction, the time-frequency resource is referred to as a second time-frequency resource below, where the second time-frequency resource refers to a time-frequency resource used by the UE3 for communicating with the network element 2.

In a first possible implementation, the second signal sent by the network element 1 may be, for example, a SIB1 of the network element 1. In other words, when broadcasting the SSB and the SIB1, the network element 1 may carry indication information of the second time-frequency resource in the SIB1, such as carrying an index (index) of the second time-frequency resource. In this way, after receiving the SSB and the SIB1 sent by the network element 1, the UE3 may decode the SIB1 by using an MIB carried in the SSB, and obtain the indication information of the second time-frequency resource from information obtained by decoding, to determine the second time-frequency resource. Further, the SIB1 broadcast by the network element 1 may also carry information required for accessing the network element 1.

In a second possible implementation, the network element 1 may also send group-common DCI, where the group-common DCI may define a plurality of time-frequency resources that may be used by a plurality of UEs to send the WUS to the network element 2. The group-common DCI may include a plurality of bits. Consecutive partial bits in the plurality of bits indicate a time-frequency resource that can be used by a UE. Different partial bits in the plurality of bits indicate time-frequency resources that can be used by different UEs. In this way, after receiving the group-common DCI, the UE3 may parse therefrom the identifier of the second time-frequency resource that may be used by the UE3, to determine the second time-frequency resource for sending the WUS.

The second time-frequency resource includes a time-domain resource and a frequency-domain resource. The time-domain resource may be, for example, a slot and an OFDM symbol that can be occupied by the UE3 in time domain, and the frequency-domain resource may be, for example, one or more REs that can be occupied by the UE3 in frequency domain. In some examples, the second time-frequency resource may be, for example, a time-frequency resource on a PRACH that may be used when the UE3 sends information to the network element 2. No limitation is imposed herein.

It may be understood that the foregoing implementation in which the indication information of the second time-frequency resource is carried in the SIB1 is merely used as an implementation example. In another embodiment, the network element 1 may also indicate the second time-frequency resource by broadcasting other types of signals, or carrying the indication information of the second time-frequency resource in other SIBs, and the like. No limitation is imposed herein.

S403: The UE3 sends the WUS to the network element 2 by using the second time-frequency resource, where the WUS indicates the network element 2 to send a first signal.

In this embodiment, the UE3 may need to access the network element 2. In this case, the UE3 may send the WUS to the network element 2 through the second time-frequency resource indicated by the network element 1, so as to trigger the network element 2 to broadcast the first signal required for accessing the network element 2. In this embodiment, the first signal may be specifically an SSB and a SIB1 required for accessing the network element 2.

In some examples, the WUS sent by the UE3 on the second time-frequency resource may be a specific coding sequence, for example, may be a low peak-to-average power ratio code (peak-to-average power ratio, PAPR), or may be a pseudo random code (pseudo random code). Correspondingly, after decoding the received signal, the network element 2 may determine, based on the sequence obtained through decoding, whether the sequence is the specific coding sequence. If the sequence is the specific coding sequence, the network element 2 may determine that the signal is a WUS. If the sequence is not the specific coding sequence, the network element 2 may determine that the signal is not a WUS.

Alternatively, the WUS sent by the UE3 on the second time-frequency resource may be any codeword. In this case, the network element 2 may detect an energy size of a signal sent through the second time-frequency resource. When the energy of the signal is greater than a threshold, the network element 2 may determine that the signal is a WUS. Otherwise, the network element 2 may determine that the signal is not a WUS. In this way, the network element 2 may not need to decode the received signal, to simplify implementation logic of determining, by the network element 2, reception of the WUS, and save energy consumption generated by decoding the signal.

Alternatively, when the second time-frequency resource is specifically a time-frequency resource on a PRACH, the WUS sent by the UE3 through the first time-frequency resource on the PRACH may be specifically a random access message.

During actual application, the process in which the UE3 sends the WUS to the network element 1 may also be implemented in another manner. For example, a plurality of the foregoing implementation manners may be combined. No limitation is imposed herein.

S404: The network element 2 broadcasts the SSB and the SIB1 after receiving the WUS.

The SSB and the SIB1 are first signals requested by the UE3 from a network side.

S405: The UE3 accesses the network element 2 based on the SSB and the SIB1 broadcast by the network element 2.

When the WUS sent by the UE3 is detected, the network element 2 may transition from a state of broadcasting the DRS with low power consumption into a state of broadcasting the SSB and the SIB1 with relatively high power consumption, so that the UE3 accesses the network element 2 based on the SSB and the SIB1 broadcast by the network element 2.

For example, after receiving the WUS, the network element 2 may resume periodic broadcasting of the SSB and the SIB1, or may broadcast the SSB and the SIB1 within a preset quantity of signal broadcast periods, or may determine, based on a current load condition, whether to continue broadcasting the DRS with low power consumption or to broadcast the SSB and the SIB1 with relatively high power consumption.

In this embodiment, for specific implementation processes of step S404 to step S405, refer to relevant descriptions of step S305 to step S306 in the foregoing embodiment shown in FIG. 3. Details are not described herein.

During actual application, after accessing the network element 2, the UE3 may further establish an RRC connection with the network element 2, so that the UE3 may perform data interaction with the network element 2 with the RRC connection, as shown in FIG. 4.

It should be noted that, in this embodiment, a description is provided by using an example in which the first signal is an SSB and a SIB1. In another embodiment, the first signal may also be an SSB. For example, in another embodiment, the signal broadcast by the network element 2 may also be a low power synchronization signal (low power synchronization signal, LP-SS), and the UE3 within signal coverage can achieve downlink synchronization with the network element 1 based on the received LP-SS. In addition, when the UE3 detects that signal quality of the received LP-SS is less than a threshold, it represents that a problem of excessively low signal quality may occur after the signal sent by the network element 2 is transmitted to the UE3. Therefore, the UE3 may send the WUS to the network element 2 through the second time-frequency resource, so as to trigger the network element 2 to broadcast the SSB. Then, the UE3 may perform signal quality measurement on the SSB broadcast by the network element 2. In this way, the UE3 may detect whether a problem of low signal quality still exists when the SSB broadcast by the network element 2 with relatively high power consumption is transmitted to the UE3. If the problem of the low signal quality still exists, the UE3 may subsequently select another network element with better signal quality to access a network. If the problem of the low signal quality does not exist, the UE3 may subsequently perform uplink and downlink services with the network side by accessing the network element 2.

In the embodiment shown in FIG. 4, a description is provided by using an example in which the network element 2 broadcasts the DRS. In another embodiment, the network element 2 may also achieve network energy saving by broadcasting only SSB. In other words, when the WUS is not received, the network element 2 does not broadcast the SIB1, so as to save energy consumption required for broadcasting the SIB1. A description is provided below with reference to the accompanying drawings.

Refer to FIG. 6. A schematic flowchart of still another communication method is shown. The communication method shown in FIG. 6 is provided by using an example in which the method is applied to the communication system shown in FIG. 2. As shown in FIG. 6, the method may specifically include the following steps:
S601: A network element 2 broadcasts an SSB.

In this embodiment, the network element 2 may achieve network energy saving by not broadcasting a SIB1. Correspondingly, after receiving the SSB, a UE3 may implement downlink synchronization with the network element 2 based on a PSS and an SSS carried in the SSB.

S602: A network element 1 sends a second signal, where the second signal indicates a second time-frequency resource used by a UE3 to send a WUS to the network element 2.

S603: The UE3 sends the WUS to the network element 2 through the second time-frequency resource, where the WUS indicates the network element 2 to send the SSB and a SIB1.

In this embodiment, a description is provided by using an example in which a first signal requested by the UE3 from a network side is specifically an SSB and a SIB1.

S604: The network element 2 broadcasts the SSB and the SIB1 after receiving the WUS.

S605: The UE3 accesses the network element 2 based on the SSB and the SIB1 broadcast by the network element 2.

In this embodiment, for specific implementation processes of step S602 to step S605, refer to relevant descriptions of step S402 to step S405 in the foregoing embodiment shown in FIG. 4. Details are not described herein.

During actual application, after accessing the network element 2, the UE3 may further establish an RRC connection with the network element 2, so that the UE3 may perform data interaction with the network element 2 with the RRC connection, as shown in FIG. 6.

In embodiments shown in FIG. 4 and FIG. 6, a description is provided by using an example in which the network element 2 broadcasts the SSB and the SIB1 after receiving the WUS. In another embodiment, the network element 2 may not broadcast the SSB and the SIB1 either after receiving the WUS. A description is provided below with reference to the accompanying drawings.

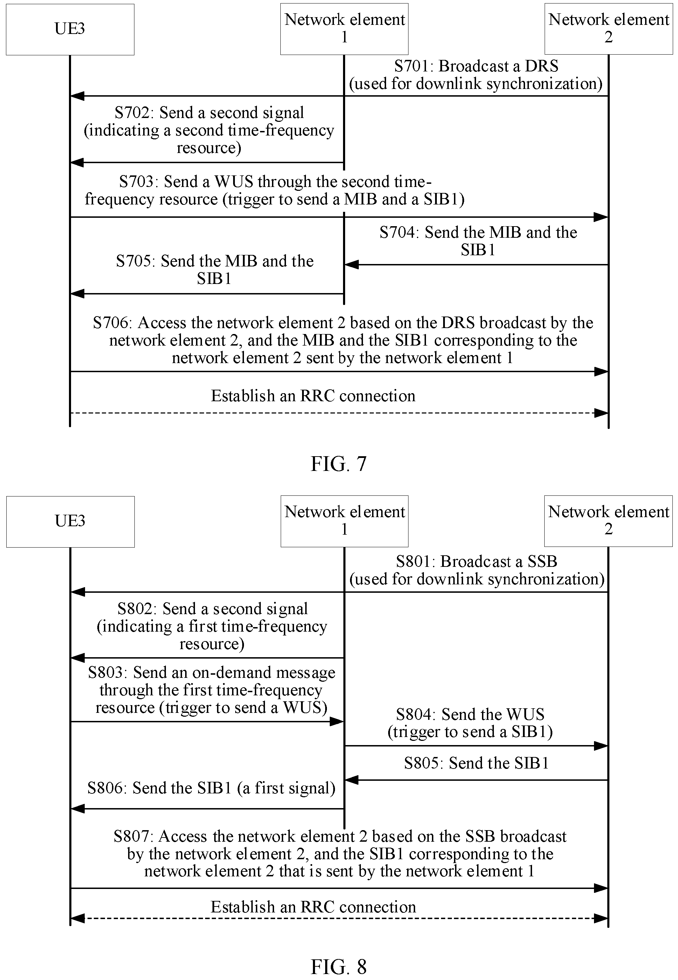

Refer to FIG. 7. A schematic flowchart of another communication method is shown. The communication method shown in FIG. 7 is described by using an example in which the method is applied to the communication system shown in FIG. 2. As shown in FIG. 7, the method may specifically include the following steps.

S701: A network element 2 broadcasts a DRS, where the DRS is used for achieving downlink synchronization with the network element 2, and the DRS includes a PSS and an SSS.

S702: A network element 1 sends a second signal, where the second signal indicates a second time-frequency resource used by a UE3 to send a WUS to the network element 2.

S703: The UE3 sends the WUS to the network element 2 through the second time-frequency resource, where the WUS indicates the network element 2 to send an MIB and a SIB1.

In this embodiment, a first signal requested by the UE3 from a network side is specifically the MIB and the SIB1 of the network element 2.

In this embodiment, for specific implementation processes of step S701 to step S703, refer to relevant descriptions in the embodiment shown in FIG. 4. Details are not described herein.

S704: The network element 2 sends the MIB and the SIB1 of the network element 2 to the network element 1 after receiving the WUS.

For example, the network element 2 may send the MIB and SIB1 of the network element 2 to the network element 1 through an Xn interface.

S705: The network element 1 sends the MIB and the SIB1 of the network element 2 to the UE3.

In an implementation example, the network element 1 may add, to a SIB1 of the network element 1, the MIB and the SIB1 sent by the network element 2, and then the network element 1 may broadcast an SSB and the SIB1. In this way, after receiving the SSB and the SIB1 sent by the network element 1, the UE3 may decode, by using the MIB carried in the SSB, the SIB1 sent by the network element 1, and obtain the MIB and the SIB1 information of the network element 2 from information obtained by decoding. In the meantime, the SIB1 broadcast by the network element 1 may further carry information required for accessing the network element 1.

It may be understood that the foregoing implementation in which the MIB and the SIB1 information of the network element 2 is carried in the SIB1 of the network element 1 is merely used as an implementation example. In another embodiment, the network element 1 may also carry the MIB and the SIB1 of the network element 2 by broadcasting another type of signal, or in another SIB. No limitation is imposed herein.

S706: The UE3 accesses the network element 2 based on the DRS broadcast by the network element 2, and the MIB and the SIB1 corresponding to the network element 2 that are sent by the network element 1.

Since the network element 2 may maintain a state of broadcasting the DRS, the UE3 may perform downlink synchronization with the network element 2 based on the DRS broadcast by the network element 2, and access, after achieving downlink synchronization, the network element 2 based on the MIB and the SIB1 corresponding to the network element 2 that are sent by the network element 1.

It should be noted that in this embodiment, a description is provided by using an example in which the UE3 directly triggers the network element 2 to send the MIB and the SIB1. In another embodiment, the UE3 may send an on-demand message to the network element 1, so as to trigger, through the network element 1, the network element 2 to send the MIB and the SIB1 and the like. No limitation is imposed herein. In addition, in another embodiment, the first signal requested by the UE3 from the network side may also be an SSB. For example, a signal broadcast by the network element 2 may be specifically an LP-SS, and when the UE3 detects that signal quality of the received LP-SS is less than a threshold, the UE3 may send the WUS to the network element 2 through the second time-frequency resource, to trigger the network element 2 to broadcast the SSB. Then, the UE3 may perform signal quality measurement on the SSB broadcast by the network element 2. In this way, the UE3 may detect whether a problem of low signal quality still exists when the SSB broadcast by the network element 2 with relatively high power consumption is transmitted to the UE3. If the problem of the low signal quality still exists, the UE3 may subsequently select another network element with better signal quality to access a network. If the problem of the low signal quality does not exist, the UE3 may subsequently perform uplink and downlink services with the network side by accessing the network element 2.

During actual application, the UE3 may further establish an RRC connection with the network element 2 after accessing the network element 2, so that the UE3 can perform data interaction with the network element 2 with the RRC connection, as shown in FIG. 7.

In this embodiment, for specific implementation processes of step S701 to step S705, refer to relevant descriptions in the foregoing embodiments. Details are not described herein.

In the embodiment shown in FIG. 7, a description is provided by using an example in which the network element 2 sends the MIB and the SIB1 of the network element 2 to the network element 1 after receiving the WUS. In another embodiment, the network element 2 may send the SIB1 to the network element 1 after receiving the WUS. In this case, before receiving the WUS, the network element 2 may broadcast only the SSB to achieve network energy saving (saving energy consumption generated by the network element 2 broadcasting the SIB1). A description is provided below with reference to the accompanying drawings.

Refer to FIG. 8. A schematic flowchart of still another communication method is shown. The communication method shown in FIG. 8 is described by using an example in which the method is applied to the communication system shown in FIG. 2. As shown in FIG. 8, the method may specifically include the following steps:
S801: A network element 2 broadcasts an SSB.

In this embodiment, the network element 2 may achieve network energy saving by not broadcasting a SIB1. Correspondingly, after receiving the SSB, a UE3 may implement downlink synchronization with the network element 2 based on a PSS and an SSS carried in the SSB.

Further, after receiving the SSB broadcast by the network element 2, the UE3 may locally store an MIB of the network element 2 in the SSB.

S802: A network element 1 sends a second signal, where the second signal indicates a first time-frequency resource used by a UE3 to send an on-demand message to the network element 1.

S803: The UE3 sends the on-demand message to the network element 1 through the first time-frequency resource, where the on-demand message is used for triggering the network element 1 to send a WUS to the network element 2.

S804: The network element 1 sends the WUS to the network element 2 after receiving the on-demand message, where the WUS indicates the network element 2 to broadcast a SIB1.

In this embodiment, the SIB1 sent by the network element 2 is the first signal requested by the UE3 from a network side.

S805: The network element 2 sends the SIB1 to the network element 1 after receiving the WUS.

For example, the network element 2 may send the SIB1 of the network element 2 to the network element 1 through an Xn interface.

S806: The network element 1 sends the SIB1 of the network element 2 to the UE3.

In an implementation example, the network element 1 may add, to a SIB1 of the network element 1, the SIB1 sent by the network element 2, and then the network element 1 may broadcast an SSB and the SIB1. Therefore, after receiving the SSB and the SIB1 sent by the network element 1, the UE3 may decode the SIB1 sent by the network element 1 by using the MIB carried in the SSB, and obtain the SIB1 corresponding to the network element 2 from information obtained by decoding. In the meantime, the SIB1 broadcast by the network element 1 may alternatively carry information required for accessing the network element 1.

It may be understood that the foregoing implementation in which the SIB1 of the network element 2 is carried in the SIB1 of the network element 1 is merely used as an implementation example. In another embodiment, the network element 1 may also carry the SIB1 of the network element 2 by broadcasting other types of signals, or in another SIB. No limitation is imposed herein.

S807: The UE3 accesses the network element 2 based on the SSB broadcast by the network element 2, and the SIB1 sent by the network element 1.

During actual application, after accessing the network element 2, the UE3 may further establish an RRC connection with the network element 2, so that the UE3 may perform data interaction with the network element 2 with the RRC connection, as shown in FIG. 8.

In this embodiment, for specific implementation processes of step S802 to step S804, and a specific implementation process in which the UE3 accesses the network element 2 based on the SSB and the SIB1 corresponding to the network element 2, refer to relevant descriptions of step S301 to step S303 in the foregoing embodiment shown in FIG. 3 and the relevant descriptions in which the UE3 accesses the network element 2 based on the SSB and the SIB1 corresponding to the network element 2. Details are not described herein.

In another embodiment, after receiving the WUS, the network element 2 may also broadcast the SIB1, so that the UE3 may access to the network element 2 based on the received SIB1 of the network element 2.

In embodiments shown in FIG. 4 to FIG. 8, a description is provided by using an example in which, before receiving the wake-up signal, the network element 2 broadcasts a signal for the UE3 to achieve downlink synchronization with the network element 2 (such as an SSB, a DRS, or an LP-SS). In another embodiment, before receiving the wake-up signal, the network element 2 may not broadcast a signal for downlink synchronization, and the UE3 implements achieving downlink synchronization with the network element 2 based on a signal broadcast by the network element 1. A description is provided below with reference to the accompanying drawings.

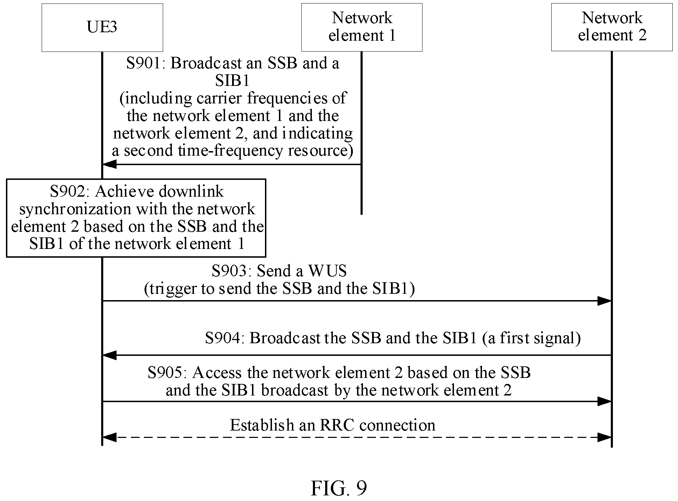

Refer to FIG. 9. A schematic flowchart of still another communication method is shown. The communication method shown in FIG. 9 is described by using an example in which the method is applied to the communication system shown in FIG. 2. The network element 1 and the network element 2 are co-located. As shown in FIG. 9, the method may specifically include the following steps.

S901: A network element 1 broadcasts an SSB and a SIB1, where the SIB1 includes a frequency of a carrier 1 of the network element 1 and a frequency of a carrier 2 of a network element 2, and the SIB1 further indicates a second time-frequency resource used by a UE3 to send a wake-up signal to the network element 2.

S902: The UE3 achieves downlink synchronization with the network element 2 based on the SSB and the SIB1 of the network element 1.

In this embodiment, the network element 2 may not broadcast the SSB and the SIB1 before receiving a WUS, so that the UE3 can achieve downlink synchronization with the network element 2 through the SSB sent by the network element 1.

During specific implementation, the network element 1 and the network element 2 are co-located. Under normal circumstances, a frame header of a carrier 1 of the network element 1 is aligned with a frame header of a carrier 2 of the network element 2. Based on this, the UE3 can achieve downlink synchronization with the network element 1 based on the SSB broadcast by the network element 1, and the UE3 can further perform calculation based on frequencies of carriers of two network elements carried in the SIB1 and the SSB broadcast by the network element 1, to achieve downlink synchronization with the network element 2. For example, the UE3 may calculate a frequency difference between the carriers of the two network elements, and implement downlink clock synchronization with the network element 2 based on the frequency difference and the SSB.

S903: The UE3 sends a WUS to the network element 2 through the second time-frequency resource indicated by the network element 1, where the WUS indicates the network element 2 to send the SSB and the SIB1.

The SSB and the SIB1 are first signals requested by the UE3 from a network side.

S904: The network element 2 broadcasts the SSB and the SIB1 after receiving the WUS.

S905: The UE3 accesses the network element 2 based on the SSB and the SIB1 broadcast by the network element 2.

During actual application, the UE3 may further establish a connection with the network element 2 after accessing the network element 2, so that the UE3 can perform data interaction with the network element 2 with the connection, as shown in FIG. 9.

For specific implementation processes of step S903 to step S905, refer to relevant descriptions of step S403 to step S405 in the foregoing embodiment shown in FIG. 4. Details are not described herein.

In the embodiment shown in FIG. 9, a description is provided by using an example in which the network element 2 broadcasts the SSB and the SIB1 after receiving the WUS. In another embodiment, the network element 2 may not broadcast the SSB and the SIB1 either after receiving the WUS. A description is provided below with reference to the accompanying drawings.

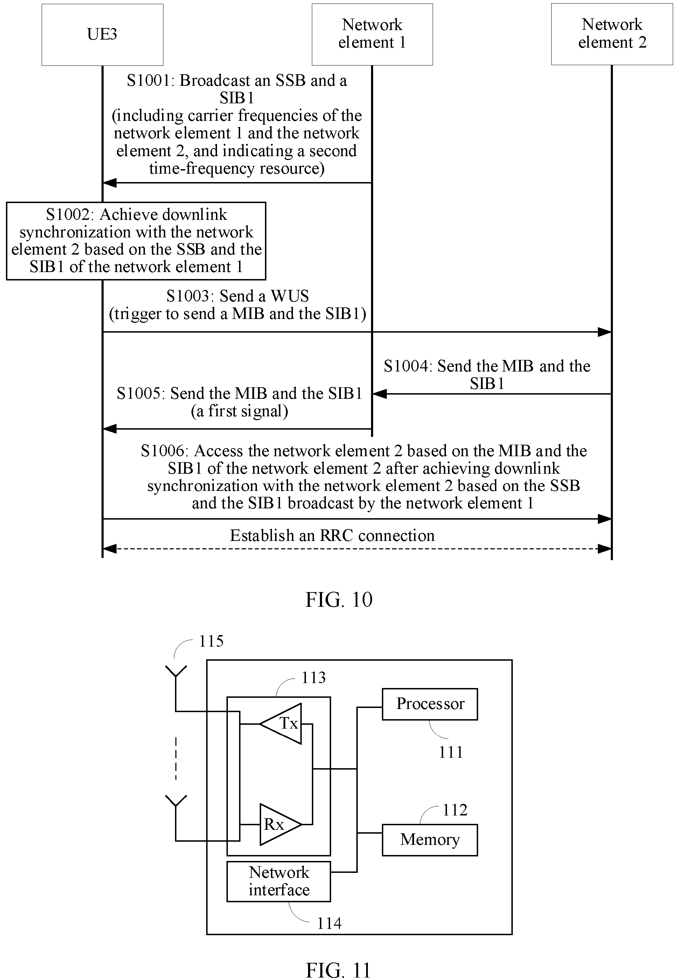

Refer to FIG. 10. A schematic flowchart of another communication method is shown. The communication method shown in FIG. 10 is described by using an example in which the method is applied to the communication system shown in FIG. 2. As shown in FIG. 10, the method may specifically include the following steps.

S1001: A network element 1 sends an SSB and a SIB1, where the SIB1 includes a frequency of a carrier 1 of the network element 1 and a frequency of a carrier 2 of a network element 2, and the SIB1 further indicates a second time-frequency resource used by a UE3 to send a wake-up signal to the network element 2.

S1002: The UE3 achieves downlink synchronization with the network element 2 based on the SSB and the SIB1 of the network element 1.

S1003: The UE3 sends a WUS to the network element 2 through the second time-frequency resource indicated by the network element 1, where the WUS indicates the network element 2 to send the MIB and the SIB1.

S1004: The network element 2 sends the MIB and the SIB1 of the network element 2 to the network element 1 after receiving the WUS.

The MIB and the SIB1 corresponding to the network element 2 are the first signals requested by the UE3 from a network side.

S1005: The network element 1 sends the MIB and the SIB1 of the network element 2 to the UE3.

S1006: The UE3 accesses the network element 2 based on the MIB and the SIB1 of the network element 2 after achieving downlink synchronization with the network element 2 based on the SSB and the SIB1 broadcast by the network element 1.

In an implementation example, after receiving the MIB and the SIB1 sent by the network element 2, the network element 1 may add the MIB and the SIB1 corresponding to the network element 2 to the SIB1 broadcast by the network element 1 within a next period of broadcasting the SSB and the SIB1. In this way, after receiving the SSB and the SIB1 broadcast by the network element 1, the UE3 may decode, by using the MIB carried in the SSB, the SIB1 sent by the network element 1, and obtain, from information obtained by decoding, information such as the MIB and the SIB1 corresponding to the network element 2. In the meantime, the UE3 may achieve downlink synchronization with the network element 2 based on the SSB and the SIB1 broadcast by the network element 1, so that the UE3 can access the network element 2 based on the decoded information such as the MIB and the SIB1 corresponding to the network element 2 after completing the downlink synchronization.

It may be understood that the foregoing implementation in which the MIB and the SIB1 information corresponding to the network element 2 is carried in the SIB1 of the network element 1 is merely used as an implementation example. In another embodiment, the network element 1 may also carry the MIB and the SIB1 corresponding to the network element 2 by broadcasting another type of signal, or in another SIB. No limitation is imposed herein.

During actual application, the UE3 may further establish an RRC connection with the network element 2 after accessing the network element 2, so that the UE3 can perform data interaction with the network element 2 with the RRC connection, as shown in FIG. 10.

In this embodiment, for specific implementation processes of step S1001 to step S1006, refer to relevant descriptions in the foregoing embodiments. Details are not described herein.

It should be noted that embodiments shown in FIG. 3 to FIG. 10 are merely used as some descriptions. During actual application, modifications or step additions may alternatively be made to the foregoing embodiments. No limitation is imposed herein.

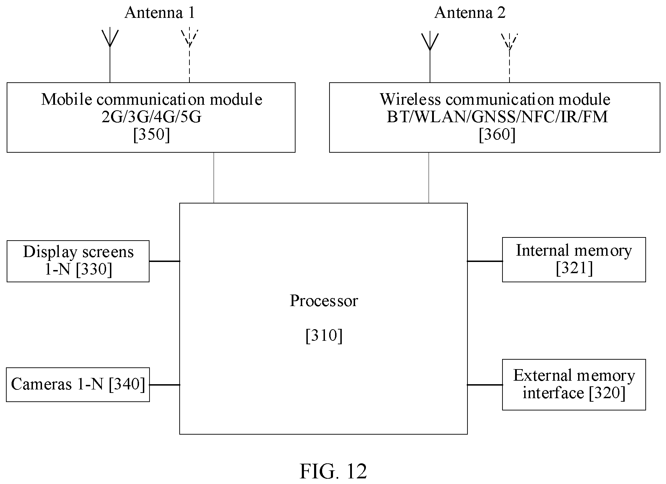

A hardware implementation of a network element and a UE is further described below with reference to FIG. 11 and FIG. 12.

Refer to FIG. 11. A schematic diagram of a hardware structure of a network element is shown. The network element shown in FIG. 11 includes at least one processor 111, at least one memory 112, at least one transceiver 113, at least one network interface 114, and one or more antennas 115. The processor 111, the memory 112, the transceiver 113, and the network interface 114 are connected, for example, through a bus. In embodiments of this application, the connection may include various types of interfaces, transmission lines, buses, or the like. This is not limited in embodiments. The antenna 115 is connected to the transceiver 113. The network interface 114 is configured to enable the network element to be connected to another communication device through a communication link. For example, the network interface 114 may include a network interface between the network element and a network element in a core network, for example, an S1 interface. The network interface may include a network interface between the network element and another network element, for example, an X2 or Xn interface.

The processor 111 shown in FIG. 11 may specifically complete an action processed by the network element in the foregoing method. The memory 112 may complete a storage action in the foregoing method. The transceiver 113 and the antenna 115 may perform receiving and sending actions on an air interface in the foregoing method. The network interface 114 may complete an action of interaction with the network element or another network element in the foregoing method.

The processor in embodiments of this application, for example, the processor 111, may include but is not limited to at least one of the following: a central processing unit (central processing unit, CPU), a microprocessor, a digital signal processor (DSP), a microcontroller unit (microcontroller unit, MCU), or various types of computing devices running software such as an artificial intelligence processor. Each type of computing device may include one or more cores for executing software instructions to perform an operation or processing. The processor may be a separate semiconductor chip, or may be integrated with another circuit into one semiconductor chip. For example, the processor may form an SoC (system on chip) together with another circuit (for example, a codec circuit, a hardware acceleration circuit, or various bus and interface circuits), or may also be integrated into an ASIC as a built-in processor of the ASIC, where the ASIC integrated with the processor may be packaged separately, or may also be packaged together with another circuit. In addition to including a core for executing software instructions to perform an operation or processing, the processor may further include a necessary hardware accelerator, such as a field programmable gate array (field programmable gate array, FPGA), a PLD (programmable logic device), or a logic circuit for implementing a dedicated logic operation.

The memory in embodiments of this application may include at least one of the following types: a read-only memory (read-only memory, ROM) or another type of static storage device that can store static information and instructions, a random access memory (random access memory, RAM) or another type of dynamic storage device that can store information and instructions, or may also be an electrically erasable programmable read-only memory (Electrically erasable programmable read-only memory, EEPROM). In some scenarios, the memory may also be a compact disc read-only memory (compact disc read-only memory, CD-ROM), or another optical disc storage, optical disk storage (including a compact optical disc, a laser disc, an optical disc, a digital versatile disc, a blu-ray disc, and the like), a magnetic disk storage medium or another magnetic storage device, or any other medium that may be configured to carry or store desired program code in a form of instructions or data structures and that may be accessed by a computer. This application is not limited thereto.

The memory 112 may exist independently and is connected to the processor 111. Optionally, the memory 112 and the processor 111 may be integrated together, for example, integrated into one chip. The memory 112 can store program code for executing the technical solutions in embodiments of this application, and execution is controlled by the processor 111. Various types of executed computer program code may also be regarded as a driver of the processor 111. For example, the processor 111 is configured to execute the computer program code stored in the memory 112, thereby implementing the technical solutions in embodiments of this application.

The transceiver 113 may be configured to support receiving or sending of radio frequency signals between the network element and another device. The transceiver 113 may be connected to the antenna 115. The transceiver 113 includes a transmitter Tx and a receiver Rx. Specifically, the one or more antennas 115 may receive a radio frequency signal. The receiver Rx of the transceiver 113 is configured to receive the radio frequency signal from the antenna, convert the radio frequency signal into a digital baseband signal or a digital intermediate frequency signal, and provide the digital baseband signal or the digital intermediate frequency signal to the processor 111, so that the processor 111 further processes the digital baseband signal or the digital intermediate frequency signal, for example, performs demodulation processing and decoding processing. In addition, the transmitter Tx in the transceiver 113 is further configured to receive, from the processor 111, a modulated digital baseband signal or a modulated digital intermediate frequency signal, convert the modulated digital baseband signal or the modulated digital intermediate frequency signal into a radio frequency signal, and send the radio frequency signal through the one or more antennas 115. Specifically, the receiver Rx may selectively perform one-stage or multi-stage down-conversion processing and analog-to-digital conversion processing on the radio frequency signal to obtain a digital baseband signal or a digital intermediate frequency signal, and an order of the down-conversion processing and the analog-to-digital conversion processing is adjustable. The transmitter Tx may selectively perform one-stage or multi-stage up-conversion processing and digital-to-analog conversion processing on the modulated digital baseband signal or the modulated digital intermediate frequency signal to obtain a radio frequency signal, and an order of the up-conversion processing and the digital-to-analog conversion processing is adjustable. The digital baseband signal and the digital intermediate frequency signal may be collectively referred to as digital signals.

FIG. 12 is a composition example of a UE according to an embodiment of this application. The UE may be, for example, a mobile phone or an intelligent wearable device (for example, an intelligent watch). A mobile phone is used as an example below. The UE may include a processor 310, an external memory interface 320, an internal memory 321, a display screen 330, a camera 340, an antenna 1, an antenna 2, a mobile communication module 350, a wireless communication module 360, and the like.

It may be understood that the structure illustrated in this embodiment does not constitute a specific limitation on the UE. In some other embodiments, the UE may include more or fewer components than those shown in the figure, or some components may be combined, or some components may be split, or components are arranged in different manners. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

It may be understood that an interface connection relationship between the modules illustrated in this embodiment is merely an example for description, and does not constitute a limitation on the structure of the UE. In some other embodiments of this application, the UE may use an interface connection manner different from that in the foregoing embodiment or use a combination of a plurality of interface connection manners.

The external memory interface 320 may be configured to connect to an external memory card such as a micro SD card, to extend a storage capability of the UE. The external storage card communicates with the processor 310 by using the external memory interface 320, to implement a data storage function. For example, files such as music and videos are stored in the external storage card.

The internal memory 321 may be configured to store computer-executable program code. The executable program code includes instructions. The processor 310 runs the instructions stored in the internal memory 321, to perform various function applications and data processing of the UE. The internal memory 321 may include a program storage area and a data storage area. The program storage area may store an operating system, an application program required for at least one function (for example, a sound playing function or an image playing function), and the like. The data storage area may store data (for example, video stream data) and the like created during use of the UE. In addition, the internal memory 321 may include a high-speed random access memory, and may further include a non-volatile memory, for example, at least one magnetic disk storage device, a flash memory device, or a universal flash storage (universal flash storage, UFS). The processor 310 runs the instructions stored in the internal memory 321, and/or the instructions stored in the memory arranged in the processor, to perform various functions and data processing of the UE.

A wireless communication function of the UE may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the UE may be configured to cover one or more communication bands. Different antennas may further be multiplexed to improve antenna utilization. For example, the antenna 1 may be multiplexed as a diversity antenna of a wireless local area network. In some other embodiments, the antenna may be used in combination with a tuning switch.

The mobile communication module 350 may provide a solution to wireless communication such as 2G/3G/4G/5G applied to the UE. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering and amplification on the received electromagnetic wave, and transmit the electromagnetic wave to the modem processor for demodulation. The mobile communication module 350 may further amplify a signal modulated by the modem processor, and convert the signal into an electromagnetic wave by using the antenna 1 for radiation. In some embodiments, at least some of functional modules of the mobile communication module 350 may be arranged in the processor 310. In some embodiments, at least some of the functional modules of the mobile communication module 350 may be arranged in a same component as at least some of modules of the processor 310.

In some embodiments, the UE initiates or receives a call request through the mobile communication module 350 and the antenna 1.

In addition, an operating system runs on the foregoing components, for example, an iOS operating system, an Android operating system, or a Windows operating system. An application program may be installed and run in the operating system. It may be clearly understood by a person skilled in the art that, for convenient and brief description, the explanation and the beneficial effects of related contents in any one of the UEs provided above can refer to the corresponding method embodiment provided above. Details are not described herein.

In addition, an embodiment of this application further provides a computer-readable storage medium. The computer-readable storage medium stores instructions that, when run on one or more computing devices, cause the one or more computing devices to perform the communication method according to the foregoing embodiments.

Further, an embodiment of this application further provides a computer program product. When the computer program product is executed by one or more computing devices, the one or more computing devices perform any one of the methods in the foregoing communication methods. The computer program product may be a software installation package. When any one of the foregoing communication methods needs to be used, the computer program product may be downloaded and executed on a computer.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that may be performed by a computer program may be easily implemented by using corresponding hardware. Further, a specific hardware structure used to achieve the same function may be of various forms, for example, an analog circuit, a digital circuit, or a dedicated circuit. However, as for this application, a software program implementation is a better implementation in most cases. Based on such an understanding, the technical solutions of this application, in essence or a part contributing to the conventional technology, may be implemented in a form of a software product. The computer software product is stored in a readable storage medium, such as a floppy disk, a USB flash drive, a removable hard disk, a ROM, a RAM, a magnetic disk, or an optical disc of a computer, and includes instructions for instructing a computer device (which may be a personal computer, a training device, a network device, or the like) to perform the methods according to embodiments of this application.

All or some of the foregoing embodiments may be implemented by using software, hardware, firmware, or any combination thereof. When the foregoing embodiments are implemented by using software, all or some of the foregoing embodiments may be implemented in a form of a computer program product.

The computer program product includes one or more computer instructions. When the computer program instructions are loaded and executed on a computer, all or some of the processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, another computer, another training device, or another data center in a wired manner (for example, through a coaxial cable, an optical fiber, or a digital subscriber line (DSL)) or a wireless manner (for example, an infrared manner, a radio manner, or a microwave manner). The computer-readable storage medium may be any usable medium that may be stored by a computer, or may be a data storage device, such as a training device or a data center in which one or more usable media are integrated. The usable medium may be a magnetic medium (such as a soft disk, a hard disk, or a magnetic tape), an optical medium (such as a DVD), a semiconductor medium (such as a solid state disk (solid state disk, SSD)), or the like.

The system architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of a new service scenario, the technical solutions provided in embodiments of this application are also applicable to a similar technical problem.

## Claims

1. A communication method, wherein the method is applied to a second network element, and the method comprises:
receiving a wake-up signal, wherein the wake-up signal is used for triggering the second network element to send a first signal, the first signal is used by a user equipment UE to access the second network element or by the UE to perform signal quality measurement on the first signal, and the UE has not established a radio resource control RRC connection with the second network element; and
sending the first signal.

2. The method according to claim 1, wherein
before the receiving a wake-up signal, the method further comprises: sending a low-power synchronization signal LP-SS, wherein
the first signal comprises a synchronization signal/physical broadcast channel block SSB.

3. The method according to claim 1, wherein
before the receiving a wake-up signal, the method further comprises: sending a discovery reference signal DRS, wherein the DRS comprises a primary synchronization signal PSS and a secondary synchronization signal SSS; and
the first signal comprises a synchronization signal/physical broadcast channel block SSB and a system information block SIB1, or the first signal comprises a master information block MIB and the SIB1.

4. The method according to claim 3, wherein
the first signal comprises the MIB and the SIB1, and
the method further comprises: sending the MIB and the SIB1 to a first network element.

5. The method according to claim 1, wherein
before the receiving a wake-up signal, the method further comprises: sending a synchronization signal/physical broadcast channel block SSB, wherein
the first signal comprises the SSB and a system information block SIB1, or the first signal comprises the SIB1.

6. A communication method, wherein the method is applied to a first network element, and the method comprises:
sending a second signal, wherein the second signal indicates a first time-frequency resource used by a user equipment UE to send an on-demand message to the first network element, and the UE has not established a radio resource control RRC connection with the first network element and a second network element;
receiving the on-demand message from the UE, wherein the on-demand message is used for triggering the first network element to send a wake-up signal, the wake-up signal is used for triggering the second network element to send a first signal, and the first signal is used by the UE to access the second network element or by the UE to perform signal quality measurement on the first signal; and
sending the wake-up signal to the second network element.

7. The method according to claim 6, wherein the method further comprises:
receiving, from the second network element, a master information block MIB and a system information block SIB1 corresponding to the second network element; and
sending the MIB and the SIB1 corresponding to the second network element.

8. The method according to claim 6 or 7, wherein the first time-frequency resource is a time-frequency resource on a physical random access channel PRACH, and the on-demand message is a random access message.

9. The method according to claim 8, wherein the second signal comprises group-common downlink control information DCI, and the group-common DCI carries an identifier of the first time-frequency resource.

10. A communication method, wherein the method is applied to a first network element, and the method comprises:
sending a second signal, wherein the second signal indicates a second time-frequency resource used by a user equipment UE to send a wake-up signal to a second network element, the UE has not established a radio resource control RRC connection with the first network element and the second network element, the wake-up signal is used for triggering the second network element to send a first signal, and the first signal is used by the UE to access the second network element or by the UE to perform signal quality measurement on the first signal.

11. The method according to claim 10, wherein the second time-frequency resource is a time-frequency resource on a physical random access channel PRACH, and the wake-up signal is a random access message.

12. The method according to claim 11, wherein the second signal comprises group-common downlink control information DCI, and the group-common DCI carries an identifier of the second time-frequency resource.

13. A communication method, wherein the method is applied to a user equipment UE, and the method comprises:
receiving a second signal, wherein the second signal indicates a first time-frequency resource used by the UE to send an on-demand message to a first network element, and the UE has not established a radio resource control RRC connection with the first network element and a second network element;
sending the on-demand message to the first network element through the first time-frequency resource, wherein the on-demand message is used for triggering the first network element to send a wake-up signal, the wake-up signal indicates the second network element to send a first signal, and the first signal is used by the UE to access the second network element or by the UE to perform signal quality measurement on the first signal;
receiving the first signal; and
accessing the second network element based on the first signal, or performing signal quality measurement on the first signal.

14. The method according to claim 13, wherein the first time-frequency resource is a time-frequency resource on a physical random access channel PRACH, and the on-demand message is a random access message.

15. The method according to claim 14, wherein the second signal comprises group-common downlink control information DCI, and the group-common DCI carries an identifier of the first time-frequency resource.

16. A communication method, wherein the method is applied to a user equipment UE, and the method comprises:
achieving downlink synchronization with a second network element, wherein the UE has not established a radio resource control RRC connection with the second network element;
receiving a second signal, wherein the second signal indicates a second time-frequency resource used by the UE to send a wake-up signal to the second network element;
sending the wake-up signal to the second network element through the second time-frequency resource, wherein the wake-up signal indicates the second network element to send a first signal, and the first signal is used by the UE to access the second network element or by the UE to perform signal quality measurement on the first signal;
receiving the first signal; and
accessing the second network element based on the first signal, or performing signal quality measurement on the first signal.

17. The method according to claim 16, wherein the achieving downlink synchronization with the second network element comprises:
receiving a low-power synchronization signal LP-SS, and achieving downlink synchronization with the second network element based on the LP-SS; or
receiving a discovery reference signal DRS, and achieving downlink synchronization with the second network element based on the DRS, wherein the DRS comprises a primary synchronization signal PSS and a secondary synchronization signal SSS; or
receiving a synchronization signal/physical broadcast channel block SSB of the second network element, and achieving downlink synchronization with the second network element based on the SSB; or
receiving an SSB and a system information block SIB1 of a first network element, and achieving downlink synchronization with the second network element based on the SSB and the SIB1 of the first network element, wherein the second network element and the first network element are co-located.

18. The method according to claim 17, wherein the UE achieves downlink synchronization with the second network element through the LP-SS, the wake-up signal is used for triggering the second network element to send the SSB, and the first signal is used by the UE to perform signal quality measurement on the first signal; and
the sending the wake-up signal to the second network element through the second time-frequency resource comprises:
sending the wake-up signal to the second network element through the second time-frequency resource when signal quality of the LP-SS is less than a threshold.

19. The method according to any one of claims 16 to 18, wherein the second time-frequency resource is a time-frequency resource on a physical random access channel PRACH, and the wake-up signal is a random access message.

20. The method according to claim 19, wherein the second signal comprises group-common downlink control information DCI, and the group-common DCI carries an identifier of the second time-frequency resource.

21. A network element, comprising:
a transceiver, configured to perform a receiving operation and a sending operation in the method according to any one of claims 1 to 12; and
a processor, configured to perform another operation other than the receiving operation and the sending operation in the method according to any one of claims 1 to 12.

22. A user equipment UE, comprising:
a transceiver, configured to perform a receiving operation and a sending operation in the method according to any one of claims 13 to 20; and
a processor, configured to perform another operation other than the receiving operation and the sending operation in the method according to any one of claims 13 to 20.

23. A communication system, comprising a user equipment UE and a network element, wherein the UE is configured to perform the method according to any one of claims 13 to 20, and the network element is configured to perform the method according to any one of claims 1 to 12.

24. A computer storage medium, configured to store a computer program, wherein the computer program, when executed, is used for implementing the communication method according to any one of claims 1 to 20.
